# EUROPEAN PATENT APPLICATION

(11) **EP 4 847 252 A1**
(43) Date of publication of application: **02.12.2026**
(21) Application number: 25179621.5
(22) Date of filing: 28.05.2025
(51) Int. Cl.: B41F 19/00, B05C 1/08, B05D 1/00, B41F 23/08, B41F 33/00, B41F 33/02, B41F 33/16

(54) **A METHOD AND A SYSTEM FOR COATING OF A SUBSTRATE**

(71) Applicant: CANON KABUSHIKI KAISHA, Tokyo 146-8501 (JP)
(72) Inventor: VONS, Johan G., Venlo (NL); GOVERS, Janneke M., Venlo (NL)
(74) Representative: Canon Production Printing IP Department

(57) **Abstract**

A method for printing system comprising a coater. The printing system receives a print job with print job data and print job settings (S1). The printing system establishes a desired coating system configuration for the print job by means of the job data and the print job settings (S2). The desired coating system configuration is suitable to coat a sheet printed upon according to the print job by the coating system. The desired coating system configuration is compared with a current configuration of the coating system (S3). Differences between the desired coating system configuration and the current configuration are identified (S4). A task list of required actions to change the current configuration into the desired coating system configuration is created (S5). The required actions are automatically initiated (S6).

## Description

### BACKGROUND OF THE INVENTION

### Field of the invention

The present invention relates to a method for coating a substrate by a coating system comprising at least one coating unit comprising an entry station for receiving the substrate to be coated, a control system for controlling print job data, print job settings and coating system settings, an application module comprising a supporting roller for supporting the substrate and an application roller for transferring a layer of coating from a surface of the application roller towards the substrate, and an end station for storing the substrate when coated, wherein the application module is configured to transport the substrate from the entry station in-between the supporting roller and the application roller towards the end station, wherein the method comprises the steps of the coating system receiving a print job with print job data and print job settings, and the coating system establishing a desired coating system configuration being suitable to coat a sheet or a roll by the coating system according to the print job data and the print job settings.

The term "coating" is hereinafter also referred to as "varnish".

The control system may also be referred to as controller or as control unit hereinafter. The coating unit may also be referred to as coater hereinafter.

Coating of sheets or rolls may immediately follow printing of the sheets or the roll by a printing system which receives a print job. However, the present invention is also suitable for an off-line coater which receives already-printed substrates together with (digital) coating instructions, also known as coat jobs.

The present invention applies to a printed flat media and a printed roll. The present invention applies to coating for a flat media printer as well as a roll-based printer. The roll-based printer may prefer to bend the print media over the pressure roller of the coater to avoid wrinkles.

### Description of Background Art

Roll coating is a method of applying thin films of finishing material to substrate of wood, metal, carton, heavy-weight paper or plastic. The substrate may be a printed media. The principle of roll coating is well known and based on the physics of transferring a layer of coating from the surface of a roller to the surface of a substrate. Roll coating is a highly effective method, precise in application and environmentally friendly and offering nearly 100 % of transfer efficiency.

The most common type of roll coater is the differential direct style where the moving components are individually and manually adjusted in speed and direction. In this way an operator controls the coating process. The process of transporting a layer of coating from the roll requires several key components. A conveyor belt or rolling system moves the substrate under the application roller to enable the film transfer. The application roller carries the coating film which will be transferred to the substrate. The application roller is covered with various materials and densities to facilitate the coating application. The application roller is exchangeable since, in the case that coating is done by means of substrates with knock out areas (places where no coating is wanted), each substrate length has its corresponding application roller diameter.

The coater comprises an applying mechanism which is configured to apply the coating to the application roller. For example, a known application mechanism comprises a metal doctor roller or metering roller which works in conjunction with the application roller to form a packet of coating called a nip. The film thickness on the application roller may be determined by the distance between the two rollers and the speed and rotation direction of each roller. The film thickness may also be determined by a mechanism which transfers the coating from a bulk storage to the application roller, for example by means of an anilox roller.

Machine set up begins with an initial manual adjustment of the application roller to a desired height. Typically the application roller is set to a light impression with respect to the substrate. Conveyor and application roll speed are set and synchronized based upon production requirements.

When a substrate is coated, the coated substrate is transferred to the end station. The weight of the coating film may be determined by a scale. From the resulting weight coating adjustments can be determined.

An analog coater requires manual operator actions when the next job needs varnish (or knock-outs) in different locations on the printed artwork (different cliché/plate on the application roller), a different varnish, or a different amount of varnish (change of an anilox).

Making these changes requires a number of manual steps, like instructing the coater to pump the old varnish out, to start a cleaning cycle to remove remaining varnish, to move the anilox and/or the application roller and/or the chamber to their take-out position(s). The required steps depend on the changes required for the next job.

Until now, the operator would figure out what kind of coater changes are required, determine the steps needed, and then initiate the steps by interacting with the coater's control panel. As a cleaning cycle takes some time and the operator has other things to do as well, he also has to plan all his work (coater actions and other) in an efficient way.

### SUMMARY OF THE INVENTION

It is the objective of the present invention to have an efficient use of the coating system.

In accordance with the present invention, a method according to claim 1 is provided.

According to the method of the present invention the coating system receives a print job with print job data and print job settings. The print job may be received from a connected printing system. The coating system establishes a desired coating system configuration for the print job by means of the job data and the print job settings. The desired coating system configuration is suitable to coat a sheet or roll printed upon by the printing system. The desired coating system configuration is compared with a current configuration of the coating system. Differences between the desired coating system configuration and the current configuration are determined. A task list of required actions to change the current configuration into the desired coating system configuration is created and the required actions are automatically initiated.

According to an embodiment the task list comprises a first subset of required actions which are suitable to be started automatically without operator intervention and a second subset of required actions which need manual steps and an operator intervention, and the method comprises the step of displaying the second subset of the tasks of the task list for start and confirmation by the operator on a user interface of the printing system and/or a user interface of the coating system.

According to an embodiment the coating system comprises a single coating unit and the step of automatically initiating the required actions for the received print job is started after the end of another print job which is being processed by a printing system before the receipt of the print job.

According to an embodiment the coating system comprises a plurality of coating units, and the step of automatically initiating the required actions for the received print job takes place on a second coating unit before the end of another print job which is being processed by a first coating unit before the receipt of the print job.

According to an embodiment the desired coating system configuration comprises for each coating unit specifications for a cliché, an anilox and a coating.

According to an alternative embodiment the coating system provides flood-coating and the desired coating system configuration is suitable for flood-coating. The coating system providing flood-coating does not have an cliché and maybe no anilox.

The present invention also relates to a coating system comprising a coating controller, at least one coating unit with a cliché and an anilox to apply coating on a printed sheet or roll, wherein the coating controller is configured to execute the steps of the method according to the present invention.

The present invention also relates to a printing system comprising a print engine for printing sheets, a print controller for receiving print jobs with print job settings and print job data, and a coating system according to the present invention and connected to the print controller for coating sheets printed by the print engine.

The present invention also relates to a software product comprising program code on a machine-readable medium, which program code, when loaded into a control system of a coating system, causes the coating system to execute the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic drawing of a coating system configured to coat substrates according to the present invention;
Fig. 2 is a schematic drawing of the application module comprised in a coating unit according to the present invention;
Fig. 3 is a schematic block diagram illustrating the control system of the coating unit according to the present invention;
Fig. 4 is a schematic block diagram illustrating the steps of a method according to the present invention; and
Fig. 5 is a diagram of a software product according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Coating system

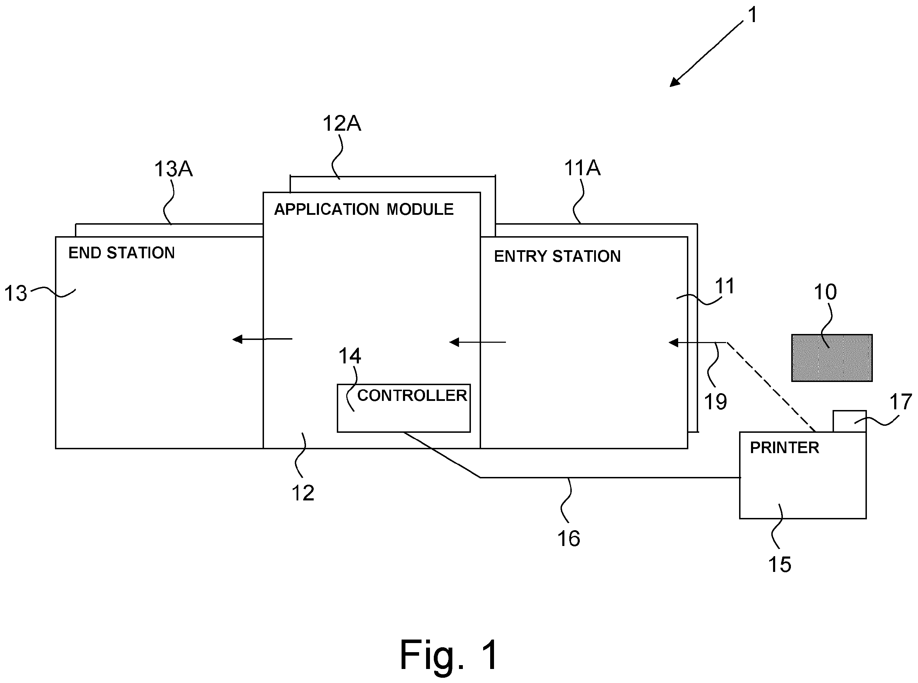

Fig. 1 is a schematic drawing of a coating system 1 configured to coat substrates 10 according to the present invention. The coating system 1 comprises at least one coating unit. In Fig. 1 two coating units are depicted. A coating unit comprises an entry station 11, 11A for receiving 19 the substrate 10 to be coated, a control system 14 for controlling print job data, print job settings and coater settings, an application module 12, 12A for transferring a layer of coating towards the substrate 10, and an end station 13, 13A for storing the substrate 10 when coated. The control system for the second coating unit with application module 12A is not shown in Fig. 1 for convenience reasons. The control system 14 is configured to receive print job data and print job settings from a printer, i.e. from a print controller comprised in a printing system 15 which is wired 16 or wireless connected to the coating system 1. The printing system 15 comprises a local user interface 17 for interaction with an operator of the printer 15 and the coating system 1. In another embodiment the coating system 1 itself comprises a local user interface specifically for user interaction with the coating system 1.

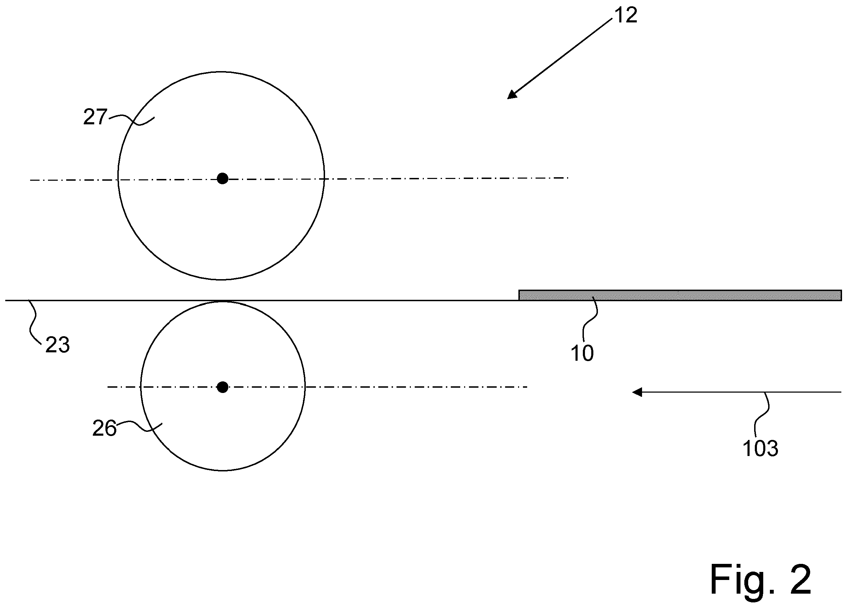

Fig. 2 is a schematic drawing of the application module 12 comprised in one of the coating units in the coating system 1 shown in Fig. 1 according to the present invention. The application module 12 comprises a supporting roller 26 for supporting the substrate 10 when moving over the support roller 10 by means of a conveyor belt 23. In an alternative embodiment a conveyor belt does not run through the coating unit but stops just before the coating unit and another belt starts just after the coating unit.

The application module 12 also comprises an application roller 27 for transferring a layer of coating from a surface of the application roller 27 towards the substrate 10. The application module 12 is configured to transport the substrate 10 moving in a direction 103 from the entry station 11 (See Fig. 1) in-between the supporting roller 26 and the application roller 27 towards the end station 13 (See Fig. 1).

The applying mechanism for applying the coating on the application roller 27 is not shown in Fig. 2 and not described hereinafter, since such applying mechanisms are known and not relevant for the present invention.

The control system 14 is configured to determine a suitable impression of the application roller 27 by means of received print job settings.

The substrate 10 may be a print medium which is printed upon by the printer 15 or by another printer as long as the printer is digitally connected to the coating system 1 for transferring print job data and print job settings. In an alternative embodiment the coating system 1 is not connected to a printer, but the coating system receives the coat job instructions from an MIS (Management Information System) or ERP (Enterprise Resource Planning) system.

The printer 15 may also physically connected to the coating system 1 by placing the printer 15 in-line with the coating system 1 in order to establish a smooth transport of the printed substrate 10 from the printer 15 to the entry station 11 of one of the coating units of the coating system 1.

### Control

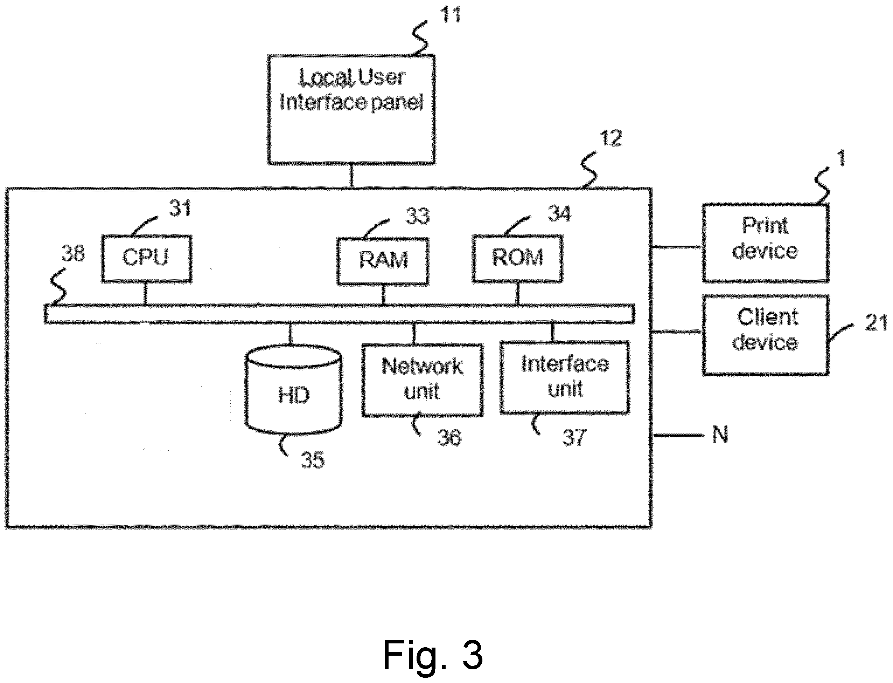

An embodiment of the control unit 14 is in more detail presented in Fig. 3. As shown in Fig. 3, the control unit 14 comprises a Central Processing Unit (CPU) 31, a Random Access Memory (RAM) 33, a Read Only Memory (ROM) 34, a network unit 36, an interface unit 37 and a hard disk (HD) 35. The aforementioned units 31 - 37 are interconnected through a bus system 38. However, the control unit 14 may also be a distributed control unit.

The CPU 31 controls the printer 15 and the coating system 1 in accordance with control programs stored in the ROM 34 or on the HD 35 and the local user interface panel 17.

Instead of local user interface panel on the printer, a user interface may be envisioned that is installed close to and digitally connected to the coating system. In another embodiment a user interface for the coating system 1 is integrated with the user interface of a printing system from which the print jobs are received. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a coating process to be described later in the method according to the present invention. The hard disk 35 also comprises an area for saving the data of externally submitted print jobs, like print job settings. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 14 to the client device 21 and to the printing system 15. The control unit 14 may be connected via an OPC UA interface to a print controller of the printer 15. OPC Unified Architecture (OPC UA) is a machine-to-machine communication protocol used for industrial automation and developed by the OPC Foundation. The OPC UA platform is an platform-independent service-oriented architecture that integrates individual OPC Classic specifications into an extensible framework. The network unit 36 connects the control unit 14 to the network N and is designed to provide communication with workstations and with other devices reachable via the network N. The print job settings contains a plurality of media properties of the print medium, i.e. the substrate, upon which the coating will be applied, and also coater related settings. Media properties are for example a type of print medium, a hardness of the print medium and a thickness of the print medium.

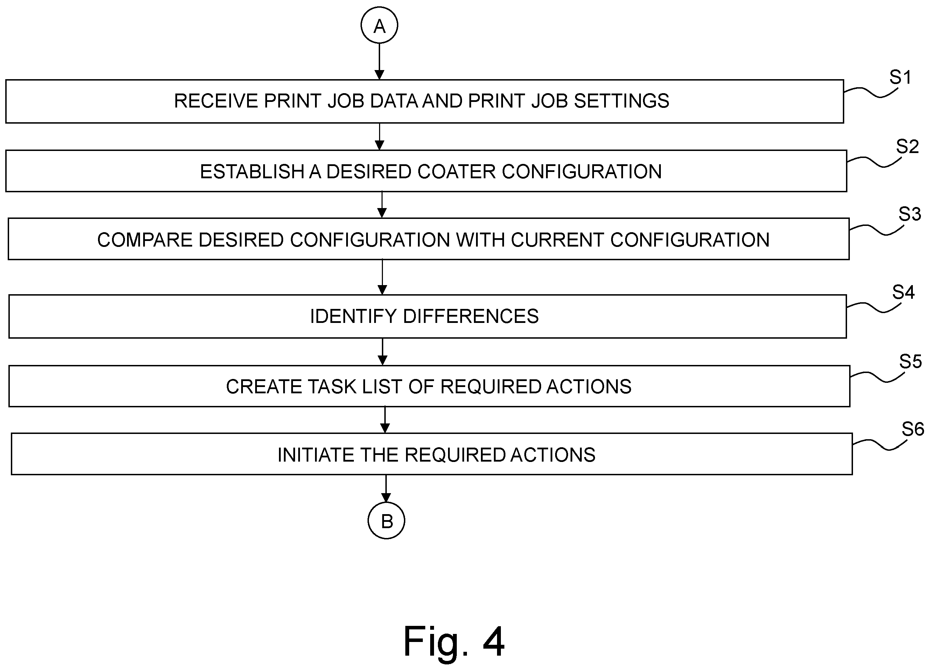

Fig. 4 discloses an example of a method according to the present invention. The present invention is about using job information to determine the required coater changes. The method starts in a starting point A which leads to a first step S1.

In the first step S1 the control system receives print job data and print job settings from a printing system which has on its turn received the print job. The print job data and print job settings comprise the type of print medium, a thickness of the print medium and other media properties. The print job data and the print job settings may be received via a network connected to the controller of the coating system. The print job settings also comprise coater-related settings.

In a second step S2 the coating system establishes a desired coating system configuration for the print job by means of the job data and the print job settings. The desired coating system configuration is suitable to coat a sheet or roll printed according to the print job, by the coating system. The coating may take place immediately after printing the sheet by the printing system. The printing and subsequent coating of the sheets may take place sheet by sheet. However, a stand-alone coater which receives a coat job with coating settings may also be envisioned.

In a third step S3 the desired coating system configuration is compared with a current configuration of the coating system. The control system compares the current coater configuration (cliché, anilox, varnish) with the needs of the next print job, as for example expressed in the job ticket of the next print job.

In a fourth step S4 differences are identified between the desired coating system configuration and the current configuration. The control system can then make smart decisions based on the differences. For example, if the next print job needs a different varnish, a required action is to automatically pump the varnish back into a bucket and start a cleaning cycle which will take a few minutes. For example, if there is no automated cleaning system, the varnish can be automatically pumped back into the a chamber, and the chamber moved to its take-out position so that it is ready to be taken out (for cleaning, or for replacement by a clean one). For example, if the next job needs a different anilox and cliché, required actions are to automatically move both the anilox and the application roller to their respective take-out positions and to unlock/open the coater door. For example, if only the cliché needs to be changed, only the application roller with the cliché moves automatically to its take-out position, the anilox remains in wet-idle (unless varnish changes). For example, after all movements have finished, the doors are automatically unlocked and can be opened. For example, after the last print job of the day (no other print jobs in the queue), the system can automatically pump back and start a thorough cleaning cycle, e.g. the end-of-day cleaning.

In a fifth step S5 a task list of required actions to change the current configuration into the desired coating system configuration is created.

In a sixth step S6 the required actions are automatically initiated. The coating system can automatically initiate the required actions as soon as the current job has ended. All required actions can be initiated until those actions that require a manual intervention by the operator, for example an actual cliché, an actual anilox, and/or an actual varnish change, when not automated.

The method ends in an end point B.

The operator does not need to spend time on preparing the actions needed for the next print job. He can do other things, and at a later point in time he can go to the coating system and immediately start changing what needs to be changed.

In case of a digital coater which does not need a cliché and anilox, it may still be required to execute a washing cycle when changing to a different varnish.

According to an alternative embodiment it is allowed for the operator to set up the coater for the next print job at another moment. There are high-end analog coaters with automated varnish/anilox/sleeve changes, which allow the operator to do the setup for the next print job while the previous print job is still running, so before the engine stops for the job change. This can also be realized by having two coaters in the coating system.

Instead of the system looking at the job ticket of the next print job, the desired configuration can also be entered by an operator (e.g. when the workflow does not provide the system with a job ticket with coater-related settings) by means of the local user interface of the coating system and/or of the printing system.

The present invention may also be applied to additional automation of physical changes using robotic arms or other mechanisms.

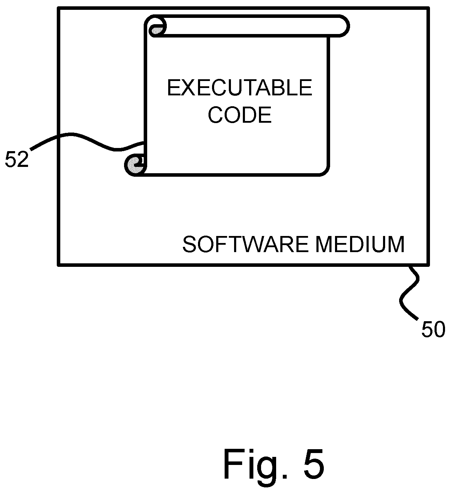

Fig. 5 schematically shows a non-transitory software medium 50 according to the invention. The software medium 50 comprises executable code 52 configured to, when executed, perform the method according to the invention, e.g. as described with respect to either the coating system 1 shown in Fig. 1, the printing system according to the present invention, or the method of controlling the coating system 1 according to the present invention shown in Fig. 1 and/or according to any of the variants and modifications of the coating system 1, of the printing system according to the present invention, and/or of the method described herein.

The non-transitory software medium 50 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the scope of the present invention, and all such modifications as would be obvious to one skilled in the art are intended to be included within the scope of the following claims.

## Claims

1. A method for coating a substrate by a coating system (1) comprising at least one coating unit for coating a substrate (10) and comprising a control system (14) for controlling print job data, print job settings and coating system settings, wherein the method comprises the steps of
- the coating system receiving a print job with print job data and print job settings,
- the coating system establishing a desired coating system configuration being suitable to coat a sheet or a roll by the coating system according to the print job data and the print job settings,
- comparing the desired coating system configuration with a current configuration of the coating system,
- identifying differences between the desired coating system configuration and the current configuration,
- creating a task list of required actions to change the current configuration into the desired coating system configuration, and
- automatically initiating the required actions.

2. A method according to claim 1, wherein the task list comprises a first subset of required actions which are suitable to be started automatically without operator intervention and a second subset of required actions which need manual steps and an operator intervention, and the method comprises the step of displaying the second subset of the tasks of the task list for start and confirmation by the operator on a user interface of the coating system or a user interface of the connected printing system.

3. A method according to claim 1 or 2, wherein the coating system comprises a single coating unit and the step of automatically initiating the required actions for the received print job is started after the end of another print job which is being processed before the receipt of the print job.

4. A method according to claim 1 or 2, wherein the coating system comprises a plurality of coating units, and the step of automatically initiating the required actions for the received print job takes place on a second coating unit before the end of another print job which is being processed by a first coating unit before the receipt of the print job.

5. A method according to any of the preceding claims, wherein the desired coating system configuration comprises for each coating unit specifications for a cliché, an anilox and a coating.

6. A method according to any of the claims 1 - 4, wherein the coating system provides flood-coating and the desired coating system configuration is suitable for flood-coating.

7. A coating system (1) comprising at least one coating unit for coating a substrate (10) and a control system (14) for controlling print job data, print job settings and coating system settings, wherein the control system is configured to execute the steps of the method according to any of the preceding claims.

8. A coating system (1) according to claim 7, wherein the at least one coating unit an entry station (11) for receiving the substrate (10) to be coated, an application module (12) comprising a supporting roller (26) for supporting the substrate (10) and an application roller (27) for transferring a layer of coating from a surface of the application roller (27) towards the substrate (10), and an end station (13) for storing the substrate (10) when coated, wherein the application module (12) is configured to transport the substrate (10) from the entry station (11) in-between the supporting roller (26) and the application roller (27) towards the end station.

9. A coating system according to claim 7 or 8, wherein the at least one coating unit comprises a cliché and an anilox to apply coating on a printed sheet or roll.

10. A printing system comprising a print engine for printing sheets, a print controller for receiving print jobs with print job settings and print job data, and a coating system according to any of the claims 7 - 9 and connected to the print controller, the coating system suitable for coating sheets printed by the print engine.

11. A printing system according to claim 10, wherein the print controller is configured to execute the steps of the method according to any of the claims 1 - 6.

12. A software product comprising program code (52) on a machine-readable medium (50), which program code (52), when loaded into a control system of a coating system, causes the coating system to execute the steps of the method according to any of the claims 1 - 6.

13. A software product comprising program code (52) on a machine-readable medium (50), which program code (52), when loaded into a control system of a printing system, causes the printing system to execute the steps of the method according to any of the claims 1 - 6.
